# EUROPÄISCHE PATENTSCHRIFT

(11) **EP 2 248 124 B1**
(45) Veröffentlichungstag und Bekanntmachung des Hinweises auf die Patenterteilung: **17.08.2011**
(21) Anmeldenummer: 09714763.1
(22) Anmeldetag: 27.02.2009
(51) Int. Cl.: G09F 13/20, F21K 2/00, C09K 11/02

(54) **FLUCHTWEGMARKIERUNG FÜR EIN FLUGZEUG SOWIE VERFAHREN ZUR HERSTELLUNG EINER FLUCHTWEGMARKIERUNG**
ESCAPE ROUTE MARKING FOR AN AIRCRAFT AND METHOD FOR PRODUCING AN ESCAPE ROUTE MARKING
SIGNALISATION D'ISSUE DE SECOURS POUR UN AVION ET PROCÉDÉ DE CRÉATION D'UNE SIGNALISATION D'ISSUE DE SECOURS

(30) Priorität: 27.02.2008 DE 102008011405
(43) Veröffentlichungstag der Anmeldung: 10.11.2010
(73) Patentinhaber: Lufthansa Technik AG, 22335 Hamburg (DE)
(72) Erfinder: SUTTER, Wolfgang, 25469 Halstenbek (DE)
(74) Vertreter: Hauck Patent- und Rechtsanwälte
(86) Internationale Anmeldenummer: PCT/EP2009/001416
(87) Internationale Veröffentlichungsnummer: WO 2009/106342

(56) Entgegenhaltungen:
- US-A1- 2006 162 620
- US-B2- 7 074 345

## Beschreibung

Die vorliegende Erfindung betrifft eine Fluchtwegmarkierung für ein Flugzeug mit photolumineszenten Pigmenten in einem Trägermaterial. Die Erfindung betrifft ebenfalls ein Verfahren zur Herstellung einer Fluchtwegmarkierung für ein Flugzeug.

Es ist bekannt, zur Markierung von Fluchtwegen in Flugzeugen photolumineszente Streifen am Boden des Flugzeuginnenraums anzuordnen. Photolumineszenz wird gelegentlich auch als Nachleuchten und/oder Phosphorisieren bezeichnet. Die sicherheitstechnischen Anforderungen sind beispielsweise in der deutschen Industrienorm DIN 67510 spezifiziert. Die Streifen werden am Boden der Flugzeugkabine verlegt und weisen den Passagieren und der Besatzung im Notfall den Weg zu den Ausgängen und Notausstiegen. In der Vergangenheit haben sich bei der Ausstattung von Flugzeugen und Flugzeugkabinen zunehmend photolumineszente Streifen als Fluchtwegmarkierung durchgesetzt, da diese ausfallsicher sind und ohne Stromversorgung betrieben werden können.

Aus EP 0 489 561 A1 ist eine dauerhaft fluoreszierende Lage bekannt, bei der Farbpigmente in eine Polymermatrix eingebunden sind. Hierbei kann das fluoreszierende Material in einem Träger eingebunden sein, der dem Fluoreszenzlicht durch zusätzliche Filter verschiedene optische Eigenschaften verleiht.

Aus US 2002/015309 A1 ist ein Notbeleuchtungssystem für ein Flugzeug bekannt, bei dem photolumineszentes Material in einer Ummantelung angeordnet ist. Die Ummantelung wird in einem Preßsitz zwischen zwei parallel zueinander verlaufenden Schienen am Boden des Flugzeugs gehalten.

Aus US 7,074,345 B2 ist ein photolumineszentes Material bekannt, das aus einer ausgehärteten Mischung eines transparenten Grundmaterials und photolumineszenter Pigmente besteht. Die Viskosität des Grundmaterials beträgt 1 Pa·s bei 20°C. Die photolumineszenten Pigmente werden in einer Menge von 7 bis 95 Gew.-% dem Grundmaterial zugesetzt. Als transparentes Grundmaterial wurde eine Reihe von Materialien vorgeschlagen. Für die Verwendung von Harzen wird vorgeschlagen, Methylmethacrylat (MMA), PMMA, modifiziertes PMMA, ungesättigte Polyesterharze, Epoxydharze und Silikonharze einzusetzen. Ferner wird darauf hingewiesen, daß Oleofinharze wie beispielsweise Polycarbonatharze und Polypropylenharze ebenfalls verwendet werden könnten. Das beschriebene photolumineszente Material besteht aus einer Mischung von photolumineszenten Pigmenten, die mit weiteren Pigmenten gemischt sind. Die weiteren Pigmente besitzen eine mittlere Korngröße von 0,1 bis 70 µm während die photolumineszenten Pigmente eine mittlere Korngröße von 150 bis 2.000 µm besitzen.
Der Erfindung liegt die technische Aufgabe zugrunde, eine Fluchtwegmarkierung für ein Flugzeug bereitzustellen, die mit möglichst geringem Fertigungsaufwand bereitgestellt werden kann, deren photolumineszente Pigmente eine ausreichende Leuchtkraft besitzen und zugleich vor Feuchtigkeit und mechanischen Beschädigungen hinreichend geschützt sind.

Erfindungsgemäß wird die Aufgabe durch eine Fluchtwegmarkierung mit den Merkmalen aus Anspruch 1 und ein Verfahren zur Herstellung einer Fluchtwegmarkierung mit den Merkmalen aus Anspruch 7 gelöst. Vorteilhafte Ausgestaltungen bilden die Gegenstände der Unteransprüche.

Die erfindungsgemäße Fluchtwegmarkierung für ein Flugzeug besitzt in ein Trägermaterial eingearbeitete photolumineszente Pigmente, die im Dunklen nachleuchten. Das Trägermaterial ist erfindungsgemäß ein Silikon, das photolumineszente Pigmente einer mittleren Korngröße von weniger als 150 µm aufweist. Die erfindungsgemäße Fluchtwegmarkierung ist gekennzeichnet durch die Einbettung photolumineszenter Pigmente einer relativen kleinen mittleren Korngröße in ein Silikonmaterial. Der Erfindung liegt die Erkenntnis zugrunde, daß die photolumineszenten Pigmente nicht von den Ausscheidungsprodukten der Silikone, wie beispielsweise Essigsäure, beschädigt werden und daß die photolumineszenten Pigmente hervorragend von dem ausgehärteten Silikon gegen flüssige Medien von außen geschützt werden. Eine gesonderte Kapselung oder sonstige Aufbereitung der photolumineszenten Pigmente ist für die Silikonmatrix nicht erforderlich, sodaß dieser zusätzliche Arbeitsschritt entfällt.

Bevorzugt beträgt die mittlere Korngröße der photolumineszenten Pigmente weniger als 120 µm und besonders bevorzugt weniger als 100 µm.

In einer bevorzugten Ausgestaltung der erfindungsgemäßen Fluchtwegmarkierung besitzt das Silikon eine Viskosität von 1 x 10⁴ mPa·s oder weniger, insbesondere weniger als 900 mPa·s (20°C). Der Erfinder hat erkannt, daß die Viskosität des Silikons entscheidend für die Einmischbarkeit der Pigmente und für eine leichtere Verarbeitung des Silikon-Pigment-Gemischs ist. Für die erfindungsgemäß vorgesehenen photolumineszenten Pigmente mit einer kleinen mittleren Korngröße hat es sich herausgestellt, daß die Verwendung von niedrig viskosen Silikonen eine besonders gute Einmischung der photolumineszenten Pigmente erlaubt und so sicherstellt, daß auch bei dem ausgehärteten Silikon die Pigmente gleichmäßig in der Silikon-Matrix verteilt sind.

In einer bevorzugten Ausgestaltung ist das Trägermaterial transparent oder durchscheinend ausgebildet. Die als Trägermaterial verwendeten Silikone können sowohl als einkomponentige, als auch als mehrkomponentige Silikone vorliegen. Sie sind vorzugsweise transparent ausgebildet. Soll die Fluchtwegmarkierung in einer anderen Farbe nachleuchten, als durch die photolumineszenten Pigmente vorgegeben, kann das Trägermaterial in einer Farbe eingefärbt sein, die von der Farbe der photolumineszenten Pigmente verschieden ist. Hierdurch besteht die Möglichkeit, die Fluchtwegmarkierung in einer gewünschten Farbe nachleuchten zu lassen.

Bevorzugt weisen die photolumineszenten Pigmente Strontium-Aluminat auf. Die Verwendung von Strontium-Aluminat ist insbesondere für die Verwendung als Fluchtwegmarkierung in Flugzeugen gut geeignet, da diese Pigmente eine ausreichende Helligkeit und eine ausreichend lange Nachleuchtdauer besitzen. Bevorzugt beträgt der Gewichtsanteil der photolumineszenten Pigmente mehr als 35, vorzugsweise 60 bis 70 Gew.-%, an der Mischung aus Silikon und Pigmenten. In einer bevorzugten Ausgestaltung besitzt die Fluchtwegmarkierung ausschließlich photolumineszente Pigmente, die in der Matrix des ausgehärteten Trägermaterials verteilt sind.

Die der Erfindung zugrundeliegende technische Aufgabe wird ebenfalls durch ein Verfahren mit den Merkmalen aus Anspruch 8 gelöst. Das erfindungsgemäße Verfahren dient zur Herstellung einer Fluchtwegmarkierung für ein Flugzeug, bei der photolumineszente Pigmente in ein Trägermaterial eingebettet sind. Die photolumineszenten Pigmente besitzen eine mittlere Korngröße von weniger als 150 µm und werden vor einer Verarbeitung des Trägermaterials in dieses eingemischt. Als Trägermaterial ist bei dem erfindungsgemäßen Verfahren bevorzugt Silikon vorgesehen. Das Herstellungsverfahren zeichnet sich durch den besonders einfachen Schritt aus, daß die photolumineszenten Pigmente gegenüber sonst üblichen photolumineszenten Pigmenten mit einer kleinen mittleren Korngröße in ein Silikon als Trägermaterial eingemischt werden. Aufwendige Verfahrensschritte, die die Pigmente für die Anordnung in der Matrix des Trägermaterials schützen, können entfallen. Auch gewährt die relativ kleine mittlere Korngröße, daß die photolumineszenten Pigmente gut mit dem noch nicht ausgehärteten Silikon vermischt werden können. In bevorzugten Weiterbildungen des erfindungsgemäßen Verfahrens besitzen die photolumineszenten Pigmente eine mittlere Korngröße von weniger als 120 µm und besonders bevorzugt von weniger als 100 µm.

In einer bevorzugten Weiterführung des erfindungsgemäßen Verfahrens ist das Gemisch aus Silikon und photolumineszenten Pigmenten nach der Mischung gießfähig. Bevorzugt kann die Fluchtwegmarkierung gegossen werden, wobei die Fluchtwegmarkierung mit einer Dicke von 0,25 mm bis 5 mm, vorzugsweise 0,15 mm bis 7 mm gegossen wird.

Die gießfähige Silikon-Pigmentmischung kann beispielsweise zur Verarbeitung auch mit Spritzpistolen direkt am Anwendungsort appliziert werden. Hierdurch besteht die Möglichkeit, einzelne Lücken zwischen Markierungen aufzufüllen und gezielt eine Fluchtwegmarkierung an schwer zugänglichen Orten anzubringen und/oder zu ergänzen. Neben dem Gußverfahren ist es auch möglich, geeignete Silikone zu verwenden, die eine Extrusion zulassen. In diesem Fall kann die Fluchtwegmarkierung aus dem Gemisch von photolumineszenten Pigmenten und Silikon extrudiert werden. In einer weiteren bevorzugten Ausgestaltung ist es möglich, daß der Extrusionsstrang nach Austritt aus dem Extruder vor oder nach einer Kalibrierung mit Pigmenten bestreut oder Pigmente in diesen eingewalzt werden. Hierdurch wird der Extrusionsstrang zusätzlich mit photolumineszenten Pigmenten versehen.

In einer bevorzugten Weiterführung des erfindungsgemäßen Verfahrens wird während oder nach dem Aushärten das Gemisch aus Silikon und photolumineszenten Pigmenten mit einer Kunststoffschicht verklebt. Die Kunststoffschicht kann als Abdeckung für die Fluchtwegmarkierung vorgesehen sein oder als Unterlage für diese ausgebildet sein.

Als Material für die Kunststoffschicht können bei geeigneter Oberflächenbehandlung (beispielsweise Koronaverfahren, Primer) und je nach geforderten mechanischen Eigenschaften beispielsweise Thermoplaste, wie Polycarbonat, Polyethylen, Polyamid, ABS oder andere Duroplaste, wie Epoxyd-, Polyesterharze oder Akrylate, verwendet werden.

Wird beispielsweise das Gemisch aus Silikon und photolumineszenten Pigmenten durch Gießen weiter verarbeitet, so besteht die Möglichkeit, daß ein Kunststoffstreifen in eine Gußform eingelegt wird, bevor diese mit dem Gemisch beschickt wird. Der Kunststoffstreifen kann hierbei vorab einer Oberflächenbehandlung unterzogen worden sein, um eine bessere Verbindung des Silikons mit dem Kunststoffstreifen zu gewährleisten. Bei dieser Verfahrensausgestaltung kann in einem einzigen Verfahrensschritt sowohl die Fluchtwegmarkierung mit dem photolumineszenten Material hergestellt werden, als auch die Verbindung des Silikons mit einem Kunststoffstreifen erzielt werden.

Wenn das Gemisch aus Silikon und photolumineszenten Pigmenten extrudiert wird, besteht auch die Möglichkeit, durch Koextrusion ein weiteres Kunststoffmaterial mit zu extrudieren, um so das Silikon-Pigment-Gemisch mit einem weiteren Material zu verbinden.

Wird die Kunststoffschicht als Trittschutz oder allgemeiner Schutz der Oberfläche des photolumineszenten Bauteils vor mechanischer Belastung eingesetzt, ist sie vorzugsweise transparent oder transluszent eingefärbt. Thermoplaste eignen sich hierfür aufgrund der Extrusionsfähigkeit und hoher Zähigkeit besonders gut. Als besonders vorteilhaft hat sich in der Verkehrsluftfahrt die Verwendung von Polycarbonat erwiesen, da dieses hochtransparent verfügbar ist und recht gute Eigenschaften im Hinblick auf die Brandschutzforderungen besitzt, wie sie in der Verkehrsluftfahrt gelten.

Als weitere Verarbeitungsmöglichkeit kann das ausgehärtete Silikon-Pigment-Gemisch mit einer transparenten oder transluszent eingefärbten Kunststoffschicht durch Form- oder Spritzgießen vollständig oder teilweise ummantelt werden. Damit sind insbesondere kurvige bzw. gekrümmte Bauteile mit Oberflächenschutz vor mechanischer Belastung einfach herstellbar. Hierfür eignen sich wiederum Thermoplaste vor allem für das Spritzgußverfahren und Duroplaste vor allem für den Formguß.

Die Erfindung wird nachfolgend an einem Ausführungsbeispiel näher erläutert. Es zeigt:
- Fig. 1: einen länglich ausgedehnten Streifen für die Fluchtwegmarkierung,
- Fig. 2: einen länglichen Streifen für die Fluchtwegmarkierung, der mit einer transparenten Kunststoffschicht versehen ist,
- Fig.3: einen länglichen Streifen für die Fluchtwegmarkierung, der in einer geschlossenen, einstückigen Umhüllung angeordnet ist,
- Fig.4: einen länglichen Streifen für die Fluchtwegmarkierung, der in einer zweiteiligen Umhüllung angeordnet ist,
- Fig. 5: einen länglichen Streifen zur Fluchtwegmarkierung im Querschnitt, der in einem halb offenen Kunststoffprofil angeordnet ist,
- Fig. 6: einen länglichen Streifen zur Fluchtwegmarkierung, der in einer zweiteiligen Umhüllung angeordnet ist,
- Fig. 7: einen länglichen Streifen zur Fluchtwegmarkierung im Querschnitt, der mit einer Abdeckung geschützt ist,
- Fig. 8: in einer schematischen Ansicht eine Form für den Gießvorgang eines flachen Streifens zur Fluchtwegmarkierung,
- Fig. 9: die Form aus Figur 8 während des Aushärtens,
- Fig. 10: einen länglichen Streifen zur Fluchtwegmarkierung, der in eine vollständig umschlossene Umhüllung eingebettet ist,Fig. 11 eine Vergleichsmessung für eine erfindungsgemäße Fluchtwegmarkierung mit einer herkömmlichen Fluchtwegmarkierung und
- Fig. 12: die relative Zunahme der Nachleuchtdichte bei der Vergleichsmessung aus Fig. 11.

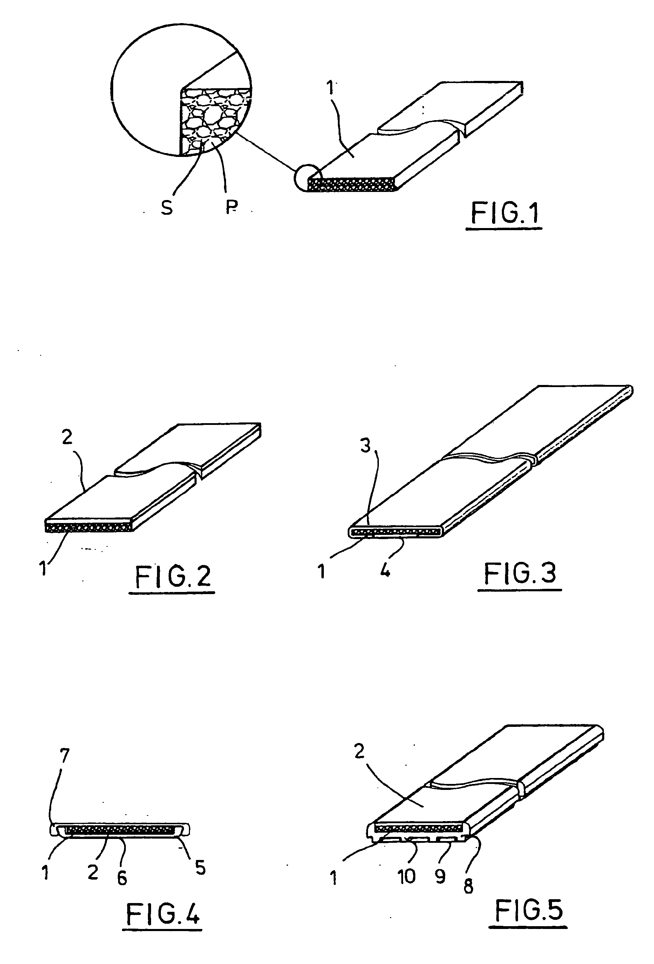

Figur 1 zeigt einen länglichen Streifen 1 aus nachleuchtendem Material, das aus photolumineszenten Pigmenten P besteht, die in eine ausgehärtete Silikonmatrix eingebettet sind. Die Detailansicht zu Figur 1 zeigt einzelne photolumineszente Pigmente P, die in die Silikonmatrix S eingebettet sind. Anstelle der gezeigten geraden Form sind insbesondere mittels Formgießen oder Spritzgießen auch gebogene Ausführungsformen der Fluchtwegmarkierung herstellbar.
Figur 2 zeigt einen nachleuchtenden Streifen 1, wie er auch in Figur 1 dargestellt ist, der zum Schutz vor mechanischen Belastungen an einem einstückigen Abdeckstreifen 2 aus Kunststoff befestigt ist. Der Abdeckstreifen ist transparent ausgebildet oder teilweise eingefärbt. Das Trägermaterial ist entweder mit der Abdeckung verklebt oder mit dieser gemeinsam hergestellt, wie nachfolgend noch erläutert wird.
Figur 3 zeigt einen nachleuchtenden Streifen 1, der zum Schutz vor mechanischer Belastung in eine einteilige, nicht vollständig geschlossene Umhüllung 3 eingesetzt ist. Die Umhüllung 3 kann transparent oder teilweise eingefärbt sein. Zur Befestigung der Fluchtwegmarkierung ist an der Unterseite eine Klebeschicht 4 vorgesehen, mit der die Fluchtwegmarkierung beispielsweise am Fußboden der Flugzeugkabine verklebt werden kann.
Figur 4 zeigt eine Fluchtwegmarkierung in einer zweiteiligen Umhüllung 5, 7, deren Teile an ihrem äußeren Rand einander umgreifen. Zur Verbesserung der Leuchtkraft ist im unteren Teil der Umhüllung 5 eine Reflektionsschicht 6 vorgesehen, die das eintreffende Licht der photolumineszenten Pigmente reflektiert und so die aus der Abdeckung 7 austretende Lichtmenge vergrößert.
Figur 5 zeigt einen nachleuchtenden Streifen 1, der mit einer Abdeckung 2 versehen ist. Der Streifen 1 ist in einem wannenförmigen Kunststoffprofil 8 aufgenommen, wobei der Streifen in dem Kunststoffprofil 8 eingeklebt oder lediglich eingelegt sein kann. Das Kunststoffprofil 8 besitzt an seiner Unterseite eine Klebeschicht 9, mit der es in der Flugzeugkabine verklebt werden kann. Ferner besitzt das Profil 8 an seiner Unterseite sich in Längsrichtung erstreckende Vorsprünge 10, die der Gewichtseinsparung und der Aufnahme ansteckbarer Abschlußelemente für das Kopf- und Fußende dienen.

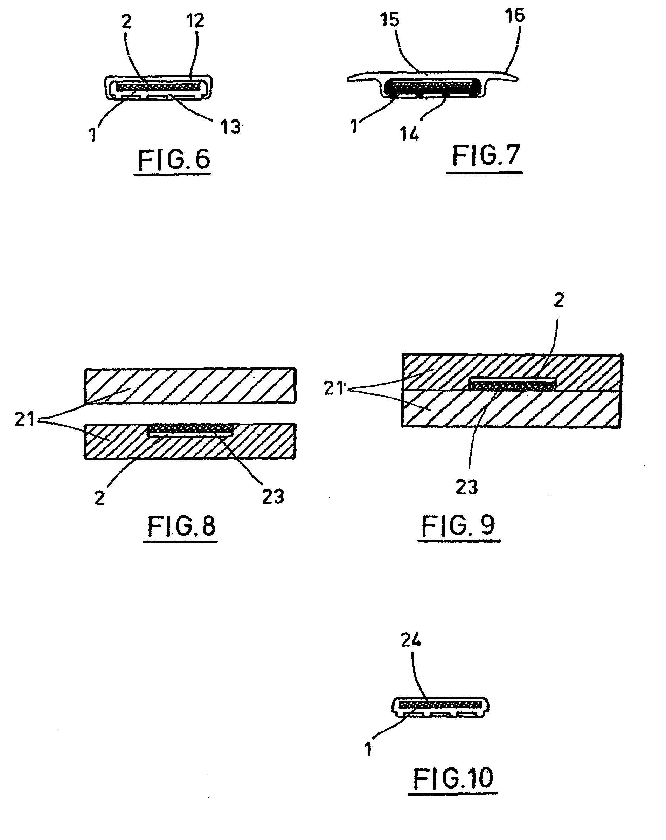

Figur 6 zeigt einen nachleuchtenden Streifen 1, der in einem Kunststoffprofil 13 angeordnet ist. Das Kunststoffprofil 13 ist zusätzlich durch einen transparenten Kunststoffdeckel 12 abgedeckt, um so den Streifen 1 vor mechanischen Beschädigungen schützen und, falls erforderlich, eine Farbfilterfolie halten zu können. Auch der in Figur 2 dargestellte Streifen 1 mit dem Abdeckstreifen 2 kann in dem Kunststoffprofil 13 angeordnet werden.
Figur 7 zeigt eine Ausgestaltung, bei der der Streifen 1 in einem nach oben hin offenen Profil 14 angeordnet ist, dessen Abdeckung 15 beidseitig abstehende Flügel 16 besitzt, die in der Breite über das Profil 14 vorstehen. Die Flügel 16 erlauben es, die Fluchtwegmarkierung besser an angrenzende Bodenbeläge anzuschließen.
Figuren 8 und 9 zeigen in einer schematischen Ansicht die Herstellung eines nachleuchtenden Streifens für die Fluchtwegmarkierung, wie er in Figur 2 dargestellt ist. Figur 8 zeigt schematisch eine Form 21, in die bereits der transparente Kunststoffstreifen 2 eingelegt ist. Das Silikon-Pigment-Gemisch wird in die Mulde der unteren Gußform 21 eingegossen. In einem nachfolgenden Schritt wird für das Aushärten die Form umgedreht, sodaß die Abdeckung 2 nicht länger unten, sondern oben liegt. Hierdurch wird während des Aushärtens eine Entmischung der Pigmente und Silikons erzielt, was zu einer Verbesserung der Leuchtkraft führt.

Nach dem Aushärten des Silikons kann die Form 21 geöffnet und der ausgehärtete Streifen mit seiner Abdeckung 2 entfernt werden.
Figur 10 zeigt eine Ausführungsform eines Leuchtstreifens von der gleichen Geometrie wie in Figur 5 dargestellt, bei der das ausgehärtete Silikon-Pigment-Gemisch 1 in eine einteilige vollständig geschlossene Umhüllung 24 eingebettet ist. Die Umhüllung kann im Spritz- oder Formgußverfahren hergestellt werden und kann auch teilweise offen gestaltet werden, beispielsweise um den Streifen 1 während des Gießens stützen zu können.

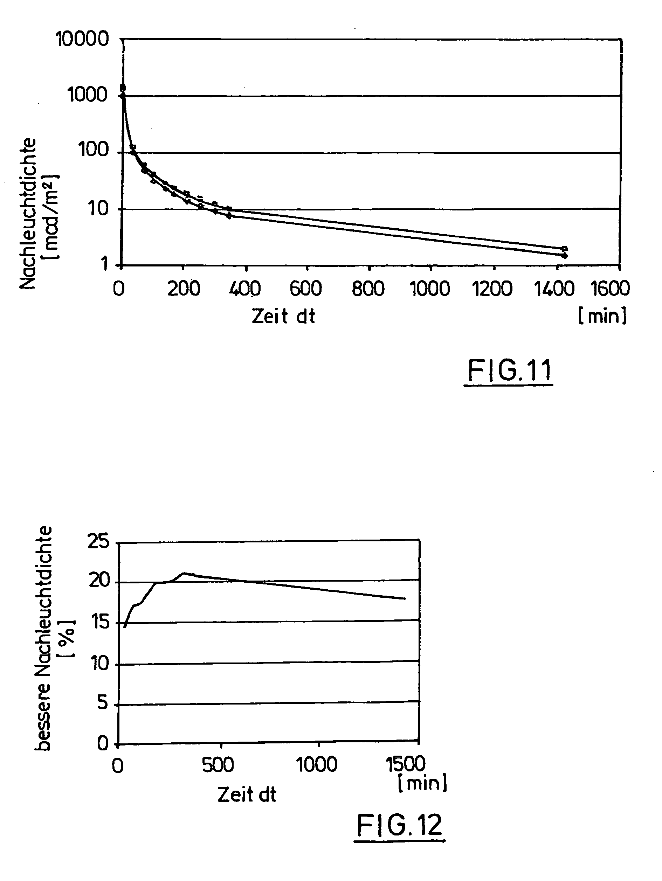

Figuren 11 und 12 zeigen die Nachleuchtdichte der erfindungsgemäßen Fluchtwegmarkierung im Vergleich zu einer herkömmlichen Fluchtwegmarkierung. In dem Vergleich wurde eine Fluchtwegmarkierung verwendet, deren Silikon-Pigment-Gemisch einen Pigmentanteil von 70 Gew-% besitzt und die auf eine mit einem Primer vorbehandelte transparente Polycarbonatfolie gegossen ist. Bei einer Schichtdicke von 1,2 mm wird diese mit einer herkömmlichen Fluchtwegmarkierung verglichen, deren Dicke ebenfalls 1,2 mm beträgt. In dem Diagramm aus Fig. 11 ist die Nachleuchtdichte in mcd/m² über der Zeit in Minuten aufgetragen. Die Messung der erfindungsgemäßen Fluchtwegmarkierung ist hierbei durch Quadrate dargestellt, während die Nachleuchtdichte des herkömmlichen Bauteils durch Rauten dargestellt ist. Deutlich zu erkennen ist, daß die Nachleuchtdichte bei der erfindungsgemäßen Fluchtwegmarkierung stets größer als die Nachleuchtdichte der herkömmlichen Fluchtwegmarkierung ist. Für die Messung wurden beide Fluchtwegmarkierungen vorher der gleichen Aufladung unterzogen und besitzen gleiche geometrische Abmessungen. Figur 12 verdeutlicht noch einmal die Verbesserung der erfindungsgemäßen Fluchtwegmarkierung, durch die Darstellung der relativen Verbesserung der Nachleuchtdichte. Deutlich zu erkennen an dem Diagramm in Figur 12 ist, daß die Nachleuchtdichte stets um mindestens 15 % besser ist, als bei der herkömmlichen Fluchtwegmarkierung. In dem besonders relevanten Zeitintervall von 200 - 600 Minuten ist die Nachieuchtdichte sogar um mindestens 20 % besser.

Nicht in den Figuren dargestellt ist eine Ausgestaltung der Erfindung, bei der das Silikon-Pigment-Gemisch durch eine Düse aufgetragen und so in eine Fuge oder auf einen gekrümmten oder winklig geformten Bereich aufgebracht werden kann. Hierdurch besteht die Möglichkeit, auch enge Zwischenräume mit der Fluchtweg-markierung zu kennzeichnen.

In einem Beispiel wird ein nachleuchtender Streifen im Formgießverfahren mit einem hochtransparenten Zweikomponenten-Silikon hergestellt. Das Silikon besitzt eine Viskosität von ungefähr 800 m Pa·s bei 20°C vor der Beimischung der photolumineszenten Pigmente. Die Pigmente wiederum basieren auf Strontium-Aluminat und haben eine durchschnittliche Korngröße von ungefähr 50 µm. Der Gewichtsanteil der Pigmente an dem fertigen Silikon-Pigment-Gemisch beträgt ungefähr 60 Gew.-%.

Bereits bei einer Dicke von 1,5 mm konnte eine ausreichende Nachleuchtdichte erzielt werden, wie sie im heutigen Stand der Technik für die Verkehrsluftfahrt eingesetzt wird. Die große Nachleuchtdichte verbunden mit der geringen Dicke der Fluchtwegmarkierung erlaubt es, diese besonders gut in Kabinenbeläge aus Teppich oder Gummimatten einzulassen. Ausgiebige Salzsprühproben für mehr als 1.000h haben eine deutlich höhere Beständigkeit der in die Silikonmatrix eingebetteten Pigmente als bei herkömmlichen Fluchtwegmarkierungen ergeben.

## Patentansprüche

1. Verfahren zur Herstellung einer Fluchtwegmarkierung für ein Flugzeug mit photolumineszenten Pigmenten, die in ein Trägermaterial eingebettet sind, **dadurch gekennzeichnet, daß**
die photolumineszenten Pigmente eine mittlere Korngröße von weniger als 120 µm aufweisen und vor einer Verarbeitung des Trägermaterials in diese eingemischt werden, wobei als Trägermaterial Silikon mit einer Viskosität von weniger als 10 Pa·s (20° C) vorgesehen ist, wobei das Gemisch aus Silikon und photolumineszenten Pigmenten nach der Mischung gießfähig ist.

2. Verfahren nach Anspruch 1, **dadurch gekennzeichnet, daß** die mittlere Korngröße weniger als 100 µm beträgt.

3. Verfahren nach Anspruch 1 oder 2, **dadurch gekennzeichnet, daß** die Fluchtwegmarkierung gegossen wird.

4. Verfahren nach Anspruch 3, **dadurch gekennzeichnet, daß** die Fluchtwegmarkierung in einer Dicke von 0,15 mm bis 7 mm gegossen wird.

5. Verfahren nach Anspruch 4, **dadurch gekennzeichnet, daß** die Fluchtwegmarkierung in einer Dicke von 0,25 mm bis 5 mm gegossen wird.

6. Verfahren nach einem der Ansprüche 1 oder 2, **dadurch gekennzeichnet, daß** die Fluchtwegmarkierung aus dem Gemisch von photolumineszenten Pigmenten und Silikon extrudiert wird.

7. Verfahren nach Anspruch 6, **dadurch gekennzeichnet, daß** der Extrusionsstrang nach Austritt aus dem Extruder zusätzlich mit Pigmenten versehen wird.

8. Verfahren nach einem der Ansprüche 1 bis 7, **dadurch gekennzeichnet, daß** das Gemisch aus Silikon und photolumineszenten Pigmenten während der Verarbeitung mit einer Kunststoffschicht verklebt wird.

9. Verfahren nach Anspruch 8, **dadurch gekennzeichnet, daß** ein transparenter Kunststoffstreifen in eine Gußform eingelegt wird und nachfolgend die Gußform mit dem Gemisch aus Silikon und photolumineszenten Pigmenten beschickt wird.

10. Verfahren nach einem der Ansprüche 1 bis 7, **dadurch gekennzeichnet, daß** das Gemisch aus Silikon und photolumineszenten Pigmenten mit einem weiteren Kunststoffmaterial koextrudiert wird.

11. Verfahren nach einem der Ansprüche 1 bis 7, **dadurch gekennzeichnet, daß** dass das ausgehärtete Trägermaterial mit einem weiteren Kunststoffmaterial teilweise oder vollständig umgossen wird.

12. Verfahren nach Anspruch 11, **dadurch gekennzeichnet, daß** das weitere Kunststoffmaterial im Spritzguss um das Trägermaterial gegossen wird.

13. Verfahren nach Anspruch 11, **dadurch gekennzeichnet, daß** das weitere Kunststoffmaterial im Formguss um das Trägermaterial gegossen wird.

14. Verfahren nach einem der Ansprüche 10 bis 13, **dadurch gekennzeichnet, daß** das weitere Kunststoffmaterial eine Abdeckung für die Fluchtwegmarkierung bildet.

## Claims

1. Method for producing an escape route marking for an aircraft comprising photoluminescent pigments, which are embedded in a carrier material,
**characterised in that**
the photoluminescent pigments have a mean particle size of less than 120 µm and are incorporated therein before processing the carrier material, wherein silicone is being provided as a carrier material with a viscosity of less than 10 Pa·s (20°C), wherein the mixture of silicone and photoluminescent pigments being castable after mixing.

2. Method according to Claim 1, **characterised in that** the mean particle size is less than 100 µm.

3. Method according to Claim 1 or 2, **characterised in that** the escape route marking is cast.

4. Method according to Claim 3, **characterised in that** the escape route marking is cast in a thickness of 0.15 mm to 7 mm.

5. Method according to Claim 4, **characterised in that** the escape route markings is cast in a thickness of 0.25 mm to 5 mm.

6. Method according to one of Claims 1 or 2, **characterised in that** the escape route marking is extruded from the mixture of photoluminescent pigments and silicone.

7. Method according to Claim 6, **characterised in that**, after emerging from the extruder, the extruded strand is additionally provided with pigments.

8. Method according to one of Claims 1 to 7, **characterised in that** the mixture of silicone and photoluminescent pigments is bonded during processing to a plastic layer.

9. Method according to Claim 8, **characterised in that** a transparent plastics strip is inserted into a casting mould and subsequently the casting mould is loaded with the mixture of silicone and photoluminescent pigments.

10. Method according to one of Claims 1 to 7, **characterised in that** the mixture of silicone and photoluminescent pigments is coextruded with a further plastic material.

11. Method according to one of Claims 1 to 7, **characterised in that** a further plastic material is partially or completely cast around the cured carrier material.

12. Method according to Claim 11, **characterised in that** the further plastic material is cast in an injection-moulding process around the carrier material.

13. Method according to Claim 11, **characterised in that** the further plastic material is cast around the carrier material by mould casting.

14. Method according to one of Claims 10 to 13, **characterised in that** the further plastics material forms a cover for the escape route marking.

## Revendications

1. Procédé de création d'une signalisation d'issue de secours pour un avion avec des pigments photoluminescents qui sont noyés dans un matériau support, **caractérisé en ce que**
les pigments photoluminescents présentent une granulométrie moyenne de moins de 120 µm et sont mélangés avant transformation du matériau support dans celui-ci, du silicone présentant une viscosité de moins de 10 Pa.s (20 °C) étant prévu comme matériau support, le mélange de silicone et de pigments photoluminescents étant apte à la coulée après le mélange.

2. Procédé selon la revendication 1, **caractérisé en ce que** la granulométrie moyenne est inférieure à 100 µm.

3. Procédé selon la revendication 1 ou 2, **caractérisé en ce que** la signalisation d'issue de secours est coulée.

4. Procédé selon la revendication 3, **caractérisé en ce que** la signalisation d'issue de secours est coulée à une épaisseur de 0,15 mm à 7 mm.

5. Procédé selon la revendication 4, **caractérisé en ce que** la signalisation d'issue de secours est coulée à une épaisseur de 0,25 mm à 5 mm.

6. Procédé selon une des revendications 1 ou 2, **caractérisé en ce que** la signalisation d'issue de secours est extrudée du mélange de pigments photoluminescents et de silicone.

7. Procédé selon la revendication 6, **caractérisé en ce que** la barre d'extrusion est dotée en plus de pigments après la sortie de l'extrudeuse.

8. Procédé selon une des revendications 1 à 7, **caractérisé en ce que** le mélange de silicone et de pigments photoluminescents est collé pendant le traitement avec une couche de matériau plastique.

9. Procédé selon la revendication 8, **caractérisé en ce qu'**une bande de matériau plastique transparent est introduite dans un moule qui est ensuite recouvert du mélange de silicone et de pigments photoluminescents.

10. Procédé selon une des revendications 1 à 7, **caractérisé en ce que** le mélange de silicone et de pigments photoluminescents est coextrudé avec un autre matériau plastique.

11. Procédé selon une des revendications 1 à 7, **caractérisé en ce que** le matériau support durci est refondu partiellement ou entièrement avec un autre matériau plastique.

12. Procédé selon la revendication 11, **caractérisé en ce que** l'autre matériau plastique est moulé par injection autour du matériau support.

13. Procédé selon la revendication 11, **caractérisé en ce que** l'autre matériau support est coulé dans le coulage à creux perdus autour du matériau support.

14. Procédé selon une des revendications 10 à 13, **caractérisé en ce que** l'autre matériau plastique forme un revêtement pour la signalisation d'issue de secours.
